(19) Europäisches Patentamt / European Patent Office / Office européen des brevets

(11) **EP 2 392 624 A1**

(12) **EUROPEAN PATENT APPLICATION**

(43) Date of publication:
**07.12.2011 Bulletin 2011/49**

(51) Int Cl.:
***C09D 11/00*** *(2006.01)*

(21) Application number: **10164579.4**

(22) Date of filing: **01.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Akzo Nobel Coatings International B.V.**
**6824 BM Arnhem (NL)**

(72) Inventors:
• **McLachlan, Fiona**
**LONDON, SW7 1NA (GB)**

• **Sasada, Paul John Christopher**
**FARNHAM COMMON, Buckinghamshire SL2 3EL (GB)**
• **Richardson, Alban Elroy**
**HIGH WYCOMBE, Buckinghamshire HP12 4SA (GB)**

(74) Representative: **Alferink, Petrus J.T.**
**Akzo Nobel N.V.**
**Legal, IP & Compliance**
**P.O. Box 9300**
**6800 SB Arnhem (NL)**

(54) **Low VOC Colorant Compositions**

(57) An aqueous liquid colorant composition having a volatile organic content up to 50g/l and suitable for colouring aqueous or solventborne decorative coatings and basepaints comprising
i) from 0 to 29wt% of non-volatile organic liquid having a vapour pressure up to 1.3 N/m$^2$ at 25°C
ii) from 2 to 16wt% of stabilising agent
iii) from 4 to 70wt% of colour pigment
iv) from 0 to 8wt% of rheology modifying clay
v) from 0 to 20wt% of extender

wherein the ratio of iii)+iv)+v) : i)+ii) is from 1 to 3 and i)+ii) is no greater than 31wt%.

**Description**

This application relates to liquid colorant compositions which are useful in colouring both solventborne and waterborne coatings and which contain low amounts of or are substantially free of volatile organic compounds. In particular, compositions are provided which do not block open nozzles in tinting machines and which have good paint properties.

Colorants are essentially concentrated pigment compositions containing stably dispersed pigments. The characteristics of such compositions are such that they can be added, alone or in combination with other colorants containing different pigments, to a base paint and mixed in to achieve a desired colour of a ready for use paint. A base paint differs from a ready for use (RFU) paint only in that the colour has not been finally adjusted.

By having a number of the colorants each formulated using pigments of different hues, a large number of coloured paints can be provided by simply mixing at least one of the colorant(s) with the appropriate base paint in accordance with a predetermined recipe. Even more colours can be produced by providing a plurality of base paints, themselves varying in hue.

The utility of known systems comprising colorants and base paints is that paints of many colours may be produced very quickly by simply mixing the required colorant composition(s) with the selected base paint. This is especially important for small stores where a very large range of coloured paints may be supplied on demand without the need for keeping a stock of paint covering the complete colour range.

Such in-store tinting systems usually comprise up to twenty colorants (also known as tinters) and, say, three base paints in each category. In this way light, medium and deep colours can be made.

The colorants are usually housed in a tinting machine from which the individual colorants are dispensed according to the manufacturer's recipe from containers fitted with nozzles. Dosage may be manual or controlled by a computer. The problem with this type of system is that there is inevitably a residue of the colorant left in or on the nozzle that dries over time and partially or completely blocks the nozzle making accurate dispensing impossible.

Tinting machine manufacturers have attempted to overcome the problem by providing a degree of humidification in the vicinity of the nozzles. Whilst this approach reduces the problem it nevertheless adds complexity and cost to the manufacture and maintenance of the machines.

Known colorants use humectants to reduce the problem of nozzle blockage. Unfortunately, the humectants themselves tend to be volatile, contributing to the total volatile organic content (VOC) as they evaporate. Of course, as they evaporate they leave behind the dry residue referred to above which eventually blocks the dispensing nozzles.

Other known colorants use humectants which, because of their low volatility, do not contribute to VOC. However, these tend to plasticise the binder polymer resulting in soft final coatings which are easily damaged in normal use.

Known colorants may also contain stabilising agents to help disperse and stabilise the pigments in the colorant. However, dried coatings derived from colorants containing large amounts of stabilising agents also tend to be soft.

Thus there is a need for colorant compositions which do not block nozzles, are essentially VOC free and do not produce soft coatings.

Accordingly there is provided an aqueous colorant composition having a volatile organic content up to 50g/l and suitable for colouring aqueous or solventborne decorative coatings and base paints comprising

i) from 0 to 29wt% of non-volatile organic liquid having a vapour pressure up to 1.3 N/m$^2$ at 25°C
ii) from 2 to 16wt% of stabilising agent
iii) from 4 to 70wt% of colour pigment
iv) from 0 to 8wt% of rheology modifying clay
v) from 0 to 20wt% of extender

wherein the ratio of iii)+iv)+v) : i)+ii) is from 1 to 3:1 and i)+ii) is no greater than 31 wt%

Preferably, when the colour pigment iii) comprises less than 51wt% of the colorant composition, then the sum of the rheology modifying clay iv) and the extender v) is at least 2wt%.

In a further aspect of the invention there is provided a coating composition comprising or consisting of at least one colorant according to the present invention and a base paint.

In a still further aspect of the invention there is provided a tinting scheme comprising or consisting of at least one basepaint and at least one colorant of the present invention.

Preferably the colorant is free of polymeric binder as its presence tends to make nozzle blockage worse.

Preferably the colour pigment comprises from 4 to 40wt%, more preferably from 5 to 30 and most preferably from 5 to 20wt%.

**Non- volatile organic liquid**

The non-volatile organic liquid is a liquid that is not volatile at 25°C. The lack of volatility means that it does not evaporate and thus does not contribute to VOC. It is non-micellising.

Any non-volatile organic material will do so long as it is a flowable liquid when tested in accordance with the syringe test described hereinbelow.

Suitable examples of such materials include polyethylene glycols (PEG), also known as polyethylene oxide (PEO) and polyoxyethylene (POE).

Polyethylene glycols are preferred, more preferably PEG of molecular weight of at least 200 Daltons. Even more preferably the molecular weight is from 200 to 800, still more preferably from 200 to 600 Daltons, yet more preferably from 300 to 500 Daltons and most preferably PEG of molecular weight 400 Daltons is preferred.

Preferably, the amount of non-volatile organic liquid comprises or consists from 2 to 29, more preferably from 6 to 29, yet more preferably from 5 to 20 and most preferably from 5 to 15wt%.

**Stabilising Agents**

Stabilising agents are amphipathic organic materials containing both hydrophilic and hydrophobic groups. Above a minimum concentration in a liquid, they form micelles. Suitable stabilising agents include surfactants and dispersants. There is no accepted distinction between the two but generally the higher molecular weight stabilising agents of number average molecular weight more than 2000 Daltons are usually referred to as dispersants whilst stabilsizing agents of lower molecular weight are referred to as surfactants. Stabilising agents may be anionic, non-ionic or cationic. Surfactants are preferred as they tend to be more compatible with both solventborne and waterborne base paints. Anionic and/or non-ionic stabilising agents are preferred. Most preferred are stabilising agents comprising mixtures of both anionic and non-ionic surfactants. Whilst not wishing to be bound by this, it is thought that this is partly because the non-ionics provide long term dispersion stability whilst the anionics are important for wetting the pigments during the dispersion stage of colorant production. We have also found that such a combination is able to produce stable dispersions of many different pigments. A still further advantage is that when more than one colorant is added to a base paint to make the required colour, the different pigments from each colorant remain stable in the final paint.

The primary role of the stabilising agent in the colorant composition is to disperse and prevent agglomeration of the pigment particles and thereby produce a stable dispersion. Generally, pigments which are ground to fine particle size to develop the colour also have the greater surface area. Consequently more stabilising agent is required to stabilise colorants containing such high surface area pigments than those based on coarser pigments.

As the colorants are for use in both solventborne and waterborne basepaints an important feature of the stabilising agent is that it may be added to both types of base paint without flocculation or other detrimental effect.

Examples of suitable stabilising agents for use in this invention include Bermodol 2532, 2543, 2525; Dispersogen LFH; Nuosperse FA 196; Soya Lecithin; Disperbyk 102.

Preferably, the stabilising agent is a flowable liquid as a 90wt% solution in water, more preferably at 95wt% and most preferably it is a flowable liquid as a neat material at 25°C according to the syringe test hereinbelow described. Stabilising agents which do not meet these criteria tend to produce colorants that are more prone to blocking.

Surfactants are preferred because they tend to be flowable liquids at according to the syringe test probably because they tend to be of lower molecular weight than dispersants.

Preferably, nonyl phenol ethoxylate surfactants are avoided as they are thought to damage the aquatic and marine environment. Preferably, the colorants are free of alkyl polyglycoside surfactants as they are poor for stability.

The combined amount of non-volatile organic liquid and stabilising agent must not exceed 31wt% based on the total weight of the colorant, otherwise the resulting dried paint film is unacceptably soft and easily damaged. Preferably, the combined amount is from 5 to 27wt%, more preferably from 10 to 27, even more preferably from 15 to 25 and most preferably from 15 to 23wt%.

**Rheology modifying clay**

Rheology modifying clays are minerals comprising high aspect ratio sub-micron sized particles and which can form stable dispersions in aqueous media. The particles in such dispersions form loosely associated networks throughout the aqueous medium of the colorant thereby imparting rheology to the colorant. Preferably, the rheology of the colorant is shear thinning being either pseudoplastic or thixotropic, More preferably the Stormer viscosity at 25°C is from 40 to 150 KU, even more preferably from 60 to 120 KU and most preferably from 60 to 80 KU

The colorant is preferably free of organic rheology modifers to ensure compatibility with both aqueous and solventborne basepaints. Examples of organic rheology modifiers include the cellulosics; the non-ionic synthetic associative thickeners; hydrophobically modified alkali swellable emulsions and alkali swellable synthetic emulsions.

**Extender**

Extenders are essentially non-opacifying and they have little or no effect on the hue of the colorant. They are particulate inorganic materials which have a refractive index the same as or similar to that of the polymer binder used in the base paint. Since the opacifying strength of any particulate material is a consequence of the difference in refractive index of the material and the medium in which it is dispersed and its particle size, such extenders have little or no opacity in resins typically used as binders in coatings, see page 35 to 37, Paint and Surface Coatings - theory and practice edited by R.Lambourne and published by John Wiley and Sons.

Suitable extenders include calcium carbonate such as ground or precipitated chalk, and calcite; calcium sulphate such as Gypsum and anhydrite; barium sulphate such as barytes and blance fixe; silicates such as silica, diatomaceous silica, kaolin and other clays and hydrous aluminosilicates, talc and mica; calcium magnesium carbonate such as Dolomite; aluminium oxide and aluminium hydroxide.

Preferably clays are used because of their relatively small particle size and their contribution to viscosity, more preferably clays are used that have been refined for particle size, removal of impurities and brightness. More preferably, hydrous alumino silicates are used and most preferably the ASP range from BASF especially ASP 602.

**Base paint**

Base paints are an essential component of any in-store tinting system. They are usually grouped into sets of three or four base paints (light, medium, deep and optionally a clear) to cover the range of colours in each product type. Different sets are required for solventborne and waterborne products and for products of different sheen levels. Each of the sets provides base paints of differing sheen levels.

**Volatile Organic Content**

The volatile organic content (VOC) comprises organic liquids which are volatile at temperatures of 25°C and above. Organic liquids having a vapour pressure greater than 1.3N/m² at 25°C are regarded as volatile

The VOC, expressed as g/L is calculated according to the following equation

$$VOC(g/L) = \frac{1000.\sum W_{VOC}(g)}{\left( \dfrac{W_{form}(g)}{\rho_{form}(g/ml)} - \dfrac{W_{water}(g)}{\rho_{water}(g/ml)} \right)}$$

Where $\Sigma W_{VOC}$ is the total VOC in the formulation ; $W_{form}$ is the weight of the formulation; $W_{water}$ is the weight of water in the formulation and form and pater represent the density of the formulation and water respectively. The symbols in brackets indicate the units used.

Preferably the colorants have VOC from 0 to 35g/L, more preferably from 0 to 20g/L, even more preferably from 0 to 5g/L, yet more preferably from 0 to 2g/L and most preferably from 0.05 to 1 g/L.

Preferably, the total particulate solids of the colorant, by which we mean the colour pigment iii) + the rheology modifying clay iv) + the extender v) comprises or consists of from 4 to 65wt%, more preferably from 10 to 65, still more preferably from 20 to 50 and most preferably from 20 to 40wt%.

To minimise wear on tinting machine components the invention provides colorants of lower high shear viscosity.

For colorants with colour pigment content of greater than 40wt% the high shear viscosity is less than 1 Pa.s, preferably less than 0.85 Pa.s, even more preferably less than 0.75 Pa.s and most preferably less than 0.65 Pa.s.

For colorants with pigment content of less than 40 wt% the high shear viscosity is less than 0.25 Pa.s, preferably less than 0.12 Pa.s, even more preferably less than 0.1Pa.s and most preferably less than 0.06 Pa.s.

High shear viscosity is measured with a Cone and Plate Viscometer, available from REL Ltd or Sheen Instruments and described in ISO 2884.

**Pigment**

Examples of colour pigments suitable for use in the invention are listed below and include;

Organic pigments for example:-
Monoazo pigments:

C.I. Pigment Brown 25; C.I. Pigment Orange 5, 13, 36, 38, 64 and 67; C.I. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 188, 191:1, 208, 210, 245, 247 and 251; C.I. Pigment Yellow 1, 3, 62, 65, 73, 74, 97, 120, 151, 154, 168, 181, 183 and 191; C.I. Pigment Violet 32;

Diazo pigments:

C.I. Pigment Orange 16, 34, 44 and 72; C.I. Pigment Yellow 12, 13, 14, 16, 17, 81, 83, 106, 113, 126, 127, 155, 174, 176 and 188;

Diazo condensation pigments:

C.I. Pigment Yellow 93, 95 and 128; pigments: C.I. Pigment Red 144, 166, 214, 220, 221, 242 and 262; C.I. Pigment Brown 23 and 41;

Anthanthrone pigments:

C.I. Pigment Red 168;

Anthraquinone pigments:

C.I. Pigment Yellow 147, 177 and 199; C.I. Pigment Violet 31;

Anthrapyrimidine pigments:

C.I. Pigment Yellow 108;

Quinacridone pigments:

C.I. Pigment Orange 48 and 49; C.I. Pigment Red 122, 202, 206 and 209; C.I. Pigment Violet 19;

Quinophthalone pigments:

C.I. Pigment Yellow 138;

Diketopyrrolopyrrole pigments:

C.I. Pigment Orange 71, 73 and 81; C.I. Pigment Red 254, 255, 264, 270 and 272;

Dioxazine pigments:

C.I. Pigment Violet 23 and 37; C.I. Pigment Blue 80; flavanthrone pigments: C.I. Pigment Yellow 24;

Indanthrone pigments:

C.I. Pigment Blue 60 and 64;

Isoindoline pigments:

C.I. Pigments Orange 61 and 69; C.I. Pigment Red 260; C.I. Pigment Yellow 139 and 185;

Isoindolinone pigments:

C.I. Pigment Yellow 109, 110 and 173;

Isoviolanthrone pigments:

C.I. Pigment Violet 31;

Metal complex pigments:

C.I. Pigment Red 257; C.I. Pigment Yellow 117, 129, 150, 153 and 177; C.I. Pigment Green 8;

Perinone pigments:

C.I. Pigment Orange 43; C.I. Pigment Red 194;

Perylene pigments:

C.I. Pigment Black 31 and 32; C.I. Pigment Red 123, 149, 178, 179, 190 and 224; C.I. Pigment Violet 29;

Phthalocyanine pigments:

C.I. Pigment Blue 15, 15:1, 15:2, 15:3, 15:4, 15:6 and 16; C.I. Pigment Green 7 and 36;

Pyranthrone pigments:

C.I. Pigment Orange 51; C.I. Pigment Red 216;

Pyrazoloquinazolone pigments:

C.I. Pigment Orange 67; C.I. Pigment Red 251;

Thio indigo pigments:

C.I. Pigment Red 88 and 181; C.I. Pigment Violet 38;

Triarylcarbonium pigments:

C.I. Pigment Blue 1, 61 and 62; C.I. Pigment Green 1; C.I. Pigment Red 81, 81:l and 169; C.I. Pigment Violet 1, 2, 3 and 27; C.I. Pigment Black 1 (aniline black); C.I. Pigment Yellow 101 (aldazine yellow); C.I. Pigment Brown 22.

Inorganic colour pigments for example:

White pigments: titanium dioxide (C.I. Pigment White 6), zinc white, pigment grade zinc oxide; zinc sulphide, lithopone;

Black pigments: iron oxide black (C.I. Pigment Black 11), iron manganese black, spinel black (C.I. Pigment Black 27); carbon black (C.I. Pigment Black 7);

Chromatic pigments: chromium oxide, chromium oxide hydrate green; chrome green (C.I. Pigment Green 48); cobalt green (C.I. Pigment Green 50); ultramarine green; cobalt blue (C.I. Pigment Blue 28 and 36; C.I. Pigment Blue 72); ultramarine blue; manganese blue; ultramarine violet; cobalt violet; manganese violet; red iron oxide (C.I. Pigment Red 101); cadmium sulfoselenide (C.I. Pigment Red 108); cerium sulphide (C.I. Pigment Red 265); molybdate red (C.I. Pigment Red 104); ultramarine red; brown iron oxide (C.I. Pigment Brown 6 and 7), mixed brown, spinel phases and corundum phases (C.I. Pigment Brown 29, 31, 33, 34, 35, 37, 39 and 40), chromium titanium yellow (C.I. Pigment Brown 24), chrome orange; cerium sulphide (C.I. Pigment Orange 75); yellow iron oxide (C.I. Pigment Yellow 42); nickel titanium yellow (C.I. Pigment Yellow 53; C.I. Pigment Yellow 157, 158, 159, 160, 161, 162, 163, 164 and 189); chrlow 37 and 35); chrome yellow (C.I. Pigment Yellow 34); bismuth vanidate (C.I. Pigment Yellow 184).

Preferably the pigments are selected from the group consisting of CI Pigment Red 101,112, 122, 188, 254; CI Pigment Yellow 74; CI Pigment Violet 19; CI Pigment Blue 15; CI Pigment Green7; CI Pigment White 6 and CVI Pigment Black 7.

The CI designation refers to Colour Index, a system describing pigments published online by the society of Dyers and Colorists and the American Association of Textile Chemists and Colorists (http://www,colour-index,org/)

Lustre pigments: platelet-shaped pigments having a monophasic or polyphasic construction whose colour play is marked by the interplay of interference, reflection and absorption phenomena including aluminium platelets and aluminium, iron oxide and mica platelets bearing one or more coats, especially of metal oxides.

Such pigments are commercially available, for example, from BASF, Clariant, Ciba, Degussa, Elementis and Rockwood.

Usually, only one pigment is used in each colorant to but more may be used to achieve the correct hue. Preferably, only one is used.

**Additives**

The colorants may also contain additives selected from the group consisting of biocides, antifoams, flow aids and corrosion inhibitors.

**Ingredients used in the examples**

Stabilising agents

Bermodol 2525 is a coco monoethanolamide 5EO (non-ionic)
Bermadol 2532 is a cocomonoethanolamide 12 EO (non-ionic)
Bermadol 2543 is oleyl monoethanolamide 4EO (non-ionic)
Dispersogen LFH is tristyrylphenol polyoxyethylene phosphoric acid ester (anionic) Nuosperse FA196 (anionic)
Soya Lecithin
Disperbyk 102 (anionic)

Humectants

Propylene Glycol

PEG 200 is polyethylene glycol of molecular weight 200 Daltons
PEG 400 is polyethylene glycol of molecular weight 400 Daltons
Acrosolv TPnB

Pigments

Copperas R-3098D (red iron oxide)

Red Iron oxide 212M
Duploxide 216M (red iron oxide)
YZ 1888 Yellow Iron Oxide
Raven 420 beads (black)
122 Quinacridone Magenta

Biocides

Rocima V189
Dowicil 75

Polyphase AF3
Acticide OTW

Rheology Modifier

Attagel 50 is an attapulgite clay available from BASF.

Extenders

ASP 602 is a hydrous alumino silicate available from BASF.

Antifoam

DEE FO P1-35
EFKA 2550

Aqueous clear base paint

The formulation of the aqueous base paint used in the examples is:

| Ingredient | Wt% |
|---|---|
| Water | 30.67 |
| *Acrylic latex | 48.09 |
| Alumino-silicate | 11.49 |
| Calcium carbonate | 5.22 |
| Dispersant 1 | 0.63 |
| Dispersant 2 | 0.10 |
| Surfactant | 0.31 |
| 2-amino-2-methyl propan-1-ol | 0.18 |
| Biocide | 0.15 |
| Paraffinic distillate | 0.94 |
| Texanol | 1.63 |
| Cellulosic thickener | 0.60 |
| * nv =46.5%, Tg =27°C | |

Solventborne clear base paint

The formulation of the solventborne base paint used in the examples is:

| Ingredient | wt% |
|---|---|
| Long oil alkyd | 44.59 |
| Mineral spirits | 24.26 |
| Rheology modifier | 13.64 |
| Calcium carbonate | 2.06 |
| Surfactant | 12.13 |
| Co, Zr, Ca driers | 1.94 |

(continued)

| Ingredient | wt% |
|---|---|
| Methyl ethyl ketoxime | 1.38 |

The invention will now be illustrated using the following examples

**Test methods used to evaluate the examples.**

**Paint Hardness**

Pendulum Hardness
Add required amount of colorant to the chosen base paint and mix thoroughly. Draw down the resultant paint on 4 x 6inch glass panels. The wet film thickness should be adjusted accordingly to achieve comparable dry film weights of about 75 microns. Allow to dry overnight in a temperature and humidity controlled environment. The dried film pendulum hardness is measured using the Erichsen indentometer (model 299/300) available from Erichsen GmBH & CoKg , Germany. The more the number of swings, the harder the film.

Pencil Hardness

This was assessed according to the method described in ASTM D-3363.
For guidance the scale runs 6B, 5B...... B, F, H .....6H, 7H from soft to hard.

**Sand Dry**

The sand dry test described hereinbelow was used as a quick method to obtain comparative data on the propensity of the colorants to block nozzles.
Colorant is drawn down on a 12x4 inch glass panel using a three holed 100 micron draw down block. A colorant of known dry time and nozzle blocking performance should be included in the test.
The glass panel is placed on a Brook sand drier and the front edge of the sand reservoir on the colorant. The sand will drop along the length of the glass panel at a constant rate over a period of 12 hours. The colorant is dry when the sand no longer sticks to the colorant. The longer the dry time the less likely is the colorant to block nozzles.

**Syringe Test**

The syringe test is used to assess nozzle blocking of colorants and also to assess the flowability of the dispersing agents and the stabilising agent.

Nozzle Blockage

The colorant to be tested is first de-aerated by centrifuging under vacuum. Thirty $cm^3$ of the sample is drawn into a 30 $cm^3$ syringe (available from B.Braun Medical Ltd, Sheffield, England, S35 2PW) through its nozzle (length 15mm and internal diameter of 2mm). The syringe, with plunger in place and the nozzle open, is supported vertically with the open nozzle pointing downwards and stored at 25°C at ambient humidity. The colorant is non-blocking if it can be dispensed by hand after 18 hours storage.

Flowability

The non-volatile organic liquid or stabilising agent is tested is in the same way as the colorant but without prior de-aeration
The invention will now be illustrated by the following examples

**Water Spot test**

A film is drawn down on 4 x 6inch glass panels. The dry paint film should be of thickness 75micron. The films are allowed to dry overnight at 25°C at ambient humidity before testing. A drop of water of 1-2$cm^3$ is placed on a small area of the panel (making sure film is unblemished underneath).

The film beneath the droplet is monitored (blot with a tissue if necessary) for blistering.
The water droplet can be reapplied if needed.
The time of blistering is noted, it is usual for water based films to blister faster than solvent based.

**Examples**

Method

In a first stage all of the components, other than the pigment and approximately 50% of the water, are mixed for 10 minutes at 500rpm using a high speed disperser (HSD). Following this period, the pigment is added with slow stirring (500rpm). Once all of the pigment is incorporated then the speed is increased to 1000rpm and left to mix for 30minutes.
In a second stage, the colorant is passed through a horizontal bead mill (using 1mm glass beads as the grinding media and mill speed from 1000-1500rpm).
After bead milling (until fineness of grind is less than 10 micron) the rest of the water is added whilst stirring using the HSD (500rpm).

Example 1 and Comparative examples A and B of colorant

| | Ex 1 | Ex A | Ex B |
|---|---|---|---|
| **Ingredient** | %wt | | |
| Water 1 | 17.00 | 13.33 | 5.00 |
| Bermadol 2532 | 2.18 | 1.46 | |
| Bermadol 2543 | 2.92 | 3.89 | 10.22 |
| Bermadol 2525 | | | 10.22 |
| Dispersogen LFH | 3.73 | | |
| Nuosperse FA 196 | | 3.17 | |
| Disperbyk 102 | | | 1.65 |
| Rocima V 189 | | 0.30 | |
| Polyphase AF3 | | | 0.33 |
| Acticide OTW | | | 0.30 |
| DEE FO PI-35 | 0.20 | 0.30 | |
| PEG 400 | 10.00 | 0.55 | |
| PEG 200 | | | 5.01 |
| Propylene Glycol | | 3.00 | |
| Soya Lecithin | | | 1.40 |
| Arcosolve TPnB | | | 4.21 |
| Dowicil 75 | 0.30 | | |
| EFKA 2550 | | | 0.30 |
| Copperas R-3098D | 38.27 | | |
| Red Iron Oxide 212M | | 61.00 | |
| Duploxide 216M | | | 60.03 |
| ATTAGEL 50 | 2.42 | | |
| ASP 602 | 6.31 | | |

(continued)

|  | Ex 1 | Ex A | Ex B |
|---|---|---|---|
| **Ingredient** | %wt | | |
| Water 2 | 16.66 | 13.00 | 1.33 |

Colorant properties

| Sand Dry | >12 hrs | 1hr | 8hrs |
|---|---|---|---|
| Nozzle blockage (syringe test) | Pass | Fail | Pass |
| Stormer Viscosity (Krebs Units) | 67 | 90 | 82 |

The sand dry test and the syringe test correlate well with nozzle blockage in tinting machines.

Paints were made by adding 25cm$^3$ of colorant to 200cm$^3$ of an aqueous base paint and a solventborne base paint. The equivalent weights (g) are shown in the table below:

| | **Paint** | | | | | |
|---|---|---|---|---|---|---|
| **Ingredient** | 1.1 | 1.2 | A.1 | A.2 | B.1 | B.2 |
| Example 1 | 40.0 | 40.0 | | | | |
| Comparative Example A | | | 40.0 | 40.0 | | |
| Comparative Example B | | | | | 40.0 | 40.0 |
| Aqueous Base Paint | 227.8 | | 227.8 | | 227.8 | |
| Solventborne Base Paint | | 198.9 | | 198.9 | | 198.9 |
| **Paint properties** | | | | | | |
| Pendulum Hardness | 22 | 20 | 30 | 17 | 17 | 12 |
| Pencil Hardness | 4B | 2B | 4B | 3B | 6B | 6B |
| Block resistance | 5 | 5 | 5 | 4 | 4 | 4 |
| Water spot | Pass | Pass | Pass | Pass | Fail | Fail |

In summary, the example 1 of the invention does not block nozzles and has acceptable film properties when converted to aqueous and solventborne paints (1.1 and 1.2 respectively) and allowed to dry; whilst comparative example A blocks nozzles and when converted to paint has generally acceptable film properties; comparative example B on the other hand does not block nozzles but generally has poor film properties.

Examples 2-4 show further embodiments of the invention using other pigments.

|  | Ex 2 | Ex 3 | Ex 4 |
|---|---|---|---|
| Ingredient | %Wt | | |
| Water 1 | 15.60 | 30.00 | 26.67 |
| Bermadol 2532 | 1.46 | 0.64 | 2.04 |
| Bermadol 2543 | 3.89 | 1.39 | 0.94 |
| Bermadol 2525 |  | 1.01 |  |
| Dispersogen LFH | 1.00 | 0.47 | 1.80 |
| Yelkin TS |  | 0.39 | 1.82 |

(continued)

| | Ex 2 | Ex 3 | Ex 4 |
|---|---|---|---|
| Ingredient | %Wt | | |
| DEE FO Pl-35 | 0.30 | 0.16 | 0.30 |
| PEG 400 | 14.82 | 18.41 | 15.95 |
| Dowicil 75 | 0.20 | 0.20 | 0.20 |
| YZ 1888 Yellow Iron Oxide | 52.72 | | |
| Raven 420 beads | | 5.93 | |
| 1222 Quinacridone Magenta | | | 8.83 |
| ATTAGEL 50 | | 3.96 | 4.13 |
| ASP 602 | | 14.10 | 12.32 |
| Water 2 | 10.00 | 23.35 | 25.00 |

## Claims

1. An aqueous liquid colorant composition having a volatile organic content up to 50g/l and suitable for colouring aqueous or solventborne decorative coatings and basepaints comprising

   i) from 0 to 29wt% of non-volatile organic liquid having a vapour pressure up to 1.3 N/m$^2$ at 25°C
   ii) from 2 to 16wt% of stabilising agent
   iii) from 4 to 70wt% of colour pigment
   iv) from 0 to 8wt% of rheology modifying clay
   v) from 0 to 20wt% of extender

   wherein the ratio of iii)+iv)+v) : i)+ii) is from 1 to 3 and i)+ii) is no greater than 31wt%.

2. A colorant composition according to claim 1 wherein the non-volatile organic liquid comprises from 2 to 29wt%.

3. A colorant composition according to claim 1 wherein the non-volatile organic liquid comprises from 6 to 29wt%.

4. A colorant composition according to any one of the previous claims wherein the colour pigment comprises less than 51wt% and the sum of the rheology modifying clay iv) and the extender v) is at least 2wt%.

5. A colorant composition according to any one of the previous claims wherein the organic liquid comprises or consists of polyethylene glycol.

6. A colorant composition according to claim 5 wherein the polyethylene glycol has a molecular weight at least 200 Daltons.

7. A colorant composition according to claim 6 wherein the polyethylene glycol comprises or consists of polyethylene glycol of molecular weight of from 200 to 800 Daltons.

8. A colorant composition according to any one of the previous claims and which is free of polymeric binder.

9. A colorant composition according to any one of the preceding claims wherein the calculated particulate solids content of the composition is from 4 to 50 wt%

10. A colorant composition according to any one of the previous claims wherein the colour pigment is selected from the group consisting of CI Pigment Red 101,112, 122, 188, 254; CI Pigment Yellow 74; CI Pigment Violet 19; CI Pigment Blue 15; CI Pigment Green7; CI Pigment White 6 and CI Pigment Black 7.

11. A tinting scheme comprising or consisting of at least one base paint and at least one colorant according to any one of the previous claims.

12. A coating composition comprising or consisting of at least one colorant according to any one claims 1 to 9 and at least one base paint.

Europäisches
Patentamt

European
Patent Office

Office européen
des brevets

# EUROPEAN SEARCH REPORT

**Application Number**

EP 10 16 4579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 608 646 B1 (GANAPATHIAPPAN SIVAPACKIA [US] ET AL) 27 October 2009 (2009-10-27) * claims 1-22; examples 1-7 * ----- | 1-12 | INV. C09D11/00 |
| X | US 2006/063871 A1 (TAYLOR JAMES W [US] ET AL) 23 March 2006 (2006-03-23) * claims 1-35; examples 1-9 * ----- | 1-12 | |
| X | WO 2008/055244 A2 (SENSIENT COLORS INC [US]; SUJEETH P K [US]; ULRICH MARK [US]; SROUJI G) 8 May 2008 (2008-05-08) * claims 1-35; examples 1-32 * ----- | 1-12 | |
| X | WO 2005/023836 A2 (DU PONT [US]; O'BRIEN JOHN P [US]; YANG JIANJUN [US]) 17 March 2005 (2005-03-17) * claims 1-63; examples 1-20 * ----- | 1-12 | |
| X | WO 01/10923 A1 (DU PONT [US]) 15 February 2001 (2001-02-15) * claims 1-10; examples 1-12 * ----- | 1-12 | TECHNICAL FIELDS SEARCHED (IPC) |
| X | WO 00/22050 A1 (VALSPAR CORP [US]; BRANDENBURGER LARRY [US]; KORENKIEWICZ STEPHEN [US]) 20 April 2000 (2000-04-20) * claims 1-45; examples 1-14 * ----- | 1-12 | C09D |

The present search report has been drawn up for all claims

| Place of search | Date of completion of the search | Examiner |
|---|---|---|
| Munich | 19 August 2010 | Glomm, Bernhard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.....................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 10 16 4579

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2010

| Patent document cited in search report | | Publication date | Patent family member(s) | | Publication date |
|---|---|---|---|---|---|
| US 7608646 | B1 | 27-10-2009 | NONE | | |
| US 2006063871 | A1 | 23-03-2006 | US | 2009082493 A1 | 26-03-2009 |
| | | | WO | 2006034229 A1 | 30-03-2006 |
| WO 2008055244 | A2 | 08-05-2008 | EP | 2099869 A2 | 16-09-2009 |
| | | | JP | 2010508426 T | 18-03-2010 |
| | | | US | 2008115695 A1 | 22-05-2008 |
| | | | US | 2008121138 A1 | 29-05-2008 |
| | | | WO | 2008055245 A2 | 08-05-2008 |
| WO 2005023836 | A2 | 17-03-2005 | EP | 1664080 A2 | 07-06-2006 |
| | | | JP | 2007508246 T | 05-04-2007 |
| | | | KR | 20060107903 A | 16-10-2006 |
| WO 0110923 | A1 | 15-02-2001 | AU | 769420 B2 | 29-01-2004 |
| | | | AU | 6532800 A | 05-03-2001 |
| | | | BR | 0013300 A | 16-04-2002 |
| | | | CA | 2380180 A1 | 15-02-2001 |
| | | | CN | 1368986 A | 11-09-2002 |
| | | | DE | 60036624 T2 | 24-07-2008 |
| | | | EP | 1204690 A1 | 15-05-2002 |
| | | | JP | 2003506538 T | 18-02-2003 |
| | | | KR | 20020019615 A | 12-03-2002 |
| | | | MX | PA02001399 A | 12-08-2002 |
| | | | US | 6506899 B1 | 14-01-2003 |
| WO 0022050 | A1 | 20-04-2000 | CA | 2346816 A1 | 20-04-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Paint and Surface Coatings - theory and practice. John Wiley and Sons, 35-37